# EUROPÄISCHE PATENTANMELDUNG

(11) **EP 1 281 428 A1**
(43) Veröffentlichungstag der Anmeldung: **05.02.2003**
(21) Anmeldenummer: 02016381.2
(22) Anmeldetag: 26.07.2002
(51) Int. Cl.: B01D 47/02, B01D 47/06, B01D 50/00

(54) **Verfahren und Vorrichtung zum Absaugen, Fördern und Sammeln von staubförmigem und feinspanigem Gut**

(30) Priorität: 31.07.2001 DE 10138746; 08.11.2001 DE 10154793
(71) Anmelder: RINGLER, Bernhard, 73550 Waldstetten (DE)
(72) Erfinder: Ringler, Bernahrd, 73550 Waldstetten (DE); Ringler, Joachim, 73550 Waldstetten (DE)
(74) Vertreter: Dreiss, Fuhlendorf, Steimle & Becker

(57) **Zusammenfassung**

Die Erfindung betrifft ein Verfahren zum Absaugen, Fördern und Filtern von bei Bearbeitungsprozessen anfallendem Gut, insbesondere brennbarem, staubförmigem oder feinspanigem Gut, bspw. aus Aluminium, Magnesium, Graphit und dergleichen, das angesaugt, mit einer Flüssigkeit in Berührung gebracht und danach gesammelt wird. Die Erfindung betrifft außerdem eine Vorrichtung zur Durchführung des Verfahrens.

Die Erfindung kennzeichnet sich dadurch, dass die Flüssigkeit als Flüssigkeitsstrom in einen Mischbereich geführt wird, dass das angesaugte Gut im Mischbereich so geführt wird, dass es auf den Flüssigkeitsstrom prallt, in den Flüssigkeitsstrom eindringt und von dem Flüssigkeitsstrom mitgeführt wird.

## Beschreibung

Die Erfindung betrifft ein Verfahren zum Absaugen, Fördern und Sammeln von bei Bearbeitungsprozessen anfallendem Gut, insbesondere brennbarem, feinspanigem, staub- oder nebelförmigem Gut aus Metall, Aluminium, Magnesium, Graphit, Fluid und/oder dergleichen, das in einem Luftstrom angesaugt, mit einer Flüssigkeit in Berührung gebracht und danach gesammelt wird. Die Erfindung betrifft außerdem Vorrichtungen zur Durchführung des Verfahrens.

Ein derartiges Verfahren mit einer zugehörigen Vorrichtung ist aus der DE 38 38 395 A1 bekannt geworden. Hierbei wird das zu filternde Gut mittels einer Düse mit einer Flüssigkeit besprüht. Allerdings hat sich gezeigt, dass bei besonders zu chemischen Reaktionen neigenden Gütern, wie insbesondere Magnesium und Aluminium, durch das bekannte Verfahren nicht mit hunderprozentiger Sicherheit gewährleistet wird, dass das Gut vollständig von der Flüssigkeit beschichtet bzw. benetzt wird. Eine nicht vollständige Benetzung oder Beschichtung von Aluminium- oder Magnesiumstaub kann zu unerwünschten, heftigen chemischen Reaktionen führen. Insbesondere in Verbindung mit Sauerstoff entstehen hochexplosive, selbstentzündbare Gasgemische. Das bekannte Verfahren eignet sich außerdem nicht zur Absaugung von Fluiden, insbesondere von Fluidnebeln.

Der vorliegenden Erfindung liegt deshalb die Aufgabe zugrunde, ein bekanntes Verfahren und eine bekannte Vorrichtung derart weiterzubilden, dass gewährleistet ist, dass sämtliche Partikel des zu filternden Gutes vollständig mit der entsprechenden Flüssigkeit beschichtet werden. Aufgrund einer derartigen Beschichtung werden unerwünschte chemische Reaktionen unterbunden.

Zur Lösung der Aufgabe wird ein eingangs genanntes Verfahren vorgeschlagen, dass sich dadurch kennzeichnet, dass die Flüssigkeit als Flüssigkeitsstrom in einen Mischbereich geführt wird, dass das angesaugte Gut im Mischbereich so geführt wird, dass es auf den Flüssigkeitsstrom prallt, in den Flüssigkeitsstrom eintaucht und von dem Flüssigkeitsstrom mitgeführt wird. Dies hat den Vorteil, dass aufgrund des Eintauchens der einzelnen Partikel des angesaugten Gutes in den Flüssigkeitsstrom das Gut mit der Flüssigkeit vollständig benetzt bzw. beschichtet wird. Eine unerwünschte Reaktion des angesaugten Gutes mit Luft und insbesondere mit Sauerstoff kann demnach nicht mehr stattfinden. Außerdem können so auch Fluide und Fluidnebel abgesaugt werden, die in der Flüssigkeit gebunden werden.

Vorteilhafterweise strömt der Flüssigkeitsstrom mit großem Volumen und geringer Geschwindigkeit. Im Bereich des Zuflusses soll der Flüssigkeitsstrom seine Fließkontur weitgehend beibehalten und nicht abreißen. Ein vorteilhafter Flüssigkeitsvolumenstrom beträgt 4 bis 8 l/min, bezogen auf einen Luftvolumenstrom von 150 - 400 m³/h. Günstige Werte ergeben sich bei entsprechenden Verhältnissen Flüssigkeitsvolumenstrom zu Luftvolumenstrom.

Die Geschwindigkeit des Luftstromes und damit die Geschwindigkeit der von dem Luftstrom mitgeführten Partikeln des angesaugten Gutes beträgt vorteilhafterweise 30 bis 40 m/s. Im Mischbereich verlangsamt also das in den Flüssigkeitsstrom eintauchende Gut seine Geschwindigkeit auf die langsame Fließgeschwindigkeit des Flüssigkeitsstroms.

Vorteilhafterweise wird der Flüssigkeitsstrom und der Luftstrom derart geführt, dass die Partikel des angesaugten Gutes so auf den Flüssigkeitsstrom prallen, dass die Flüssigkeit möglichst nicht zu einem Nebel zerstäubt. Dies hat den Vorteil, dass aufwendige Maßnahmen zur Filterung von Flüssigkeitsnebel entfällen.

Bei einer weitere Ausführungsform der Erfindung ist vorgesehen, dass der das Gut enthaltende Flüssigkeitsstrom und der Luftstrom im Anschluss an den Mischbereich durch wenigstens einen Filter, insbesondere durch einen Siebkorb geführt werden, in dem das Gut gesammelt wird. Dadurch, dass sowohl der Flüssigkeitsstrom als auch der Luftstrom gefiltert wird, wird gewährleistet, dass sämtliche in dem Luftstrom und in dem Flüssigkeitsstrom vorhandene Partikel des Gutes ausgefiltert und gesammelt werden.

Vorteilhafterweise wird als Flüssigkeit Öl und insbesondere Speiseöl verwendet. Insbesondere in Verbindung mit einem Gut aus Aluminium und/oder Magnesium hat sich Speiseöl als vorteilhaft erwiesen. Es hat den Vorteil, dass es zum einen das Eintauchen der Partikel ermöglicht und zum anderen nicht zum Zerstäuben neigt. Ferner ist es umweltfreundlich.

Je nach der chemischen Beschaffenheit des Guts kann beispielsweise auch Wasser oder können andere, geeignete Flüssigkeiten in Frage kommen. Wasser eignet sich in Verbindung mit einem Gut, das aus Stahlspänen oder Stahlstaub gebildet ist.

Falls das abzusaugende Gut ein Fluid oder ein Fluidnebel ist, kann die Flüssigkeit dieselbe chemische Beschaffenheit wie das Fluid aufweisen. So kann beispielsweise Ölnebel abgesaugt werden, der durch das erfindungsgemäße Verfahren in die aus Öl bestehende Flüssigkeit eindringt und sich mit ihr verbindet bzw. vermischt.

Die genannte Aufgabe wird außerdem durch eine Vorrichtung zur Durchführung des im Vorhergehenden beschriebenen Verfahrens gelöst. Die Vorrichtung sieht hierbei eine das zu fördernde bzw. zu filternde Gut und den Luftstrom führende Ansaugleitung vor. Die Ansaugleitung zeichnet sich dadurch aus, dass sie einen ersten knie- oder bogenförmigen Mischabschnitt aufweist, dass im Bereich des Mischabschnitts oder stromaufwärts des Mischabschnitts ein Zulauf für den Flüssigkeitsstrom in die Ansaugleitung vorgesehen ist und dass sich der Mischbereich innerhalb des Mischabschnitts befindet.

Dies hat den Vorteil, dass aufgrund der Umlenkung des das Gut führenden Luftstromes das Gut aufgrund seines höheren spezifischen Gewichts und seiner Trägheit nicht umgelenkt wird, sondern gegen den Flüssigkeitsstrom prallt, in diesen eintaucht und von diesem mitgeführt wird. Der Luftstrom wird oberhalb des Flüssigkeitsstromes zwangsgeführt. Erfindungsgemäß wird gewährleistet, dass sämtliche Partikel des Gutes aufgrund des Eintauchens in den Flüssigkeitsstrom mit Flüssigkeit beschichtet werden.

Außerdem wird die dem anströmenden Luftstrom gegenüberliegende Wandung bzw. der Außenradius des bogenförmigen Rohrabschnitts gegen Verschleiß durch auftreffende Partikel des Gutes geschützt. Die Partikel treffen nämlich nicht auf die Wandung des Rohrabschnitts, sondern auf den Flüssigkeitsstrom.

Dadurch, dass der Mischbereich innerhalb des bogenförmigen Rohrabschnitts liegt, wird vorteilhafterweise auch aufgrund einer geeigneten Krümmung des Rohrabschnitts vermieden, dass der Flüssigkeitsstrom zerstäubt. Die Bildung eines unerwünschten Flüssigkeitsnebels wird folglich unterbunden. Idealerweise sind die Strömungsverhältnisse im Bereich des bogen- oder knieförmigen Rohrabschnitts und in dem dem Rohrabschnitt nachfolgenden Bereich laminar.

Vorteilhafterweise sieht die Ansaugleitung insbesondere sowohl im Bereich stromaufwärts des knie- oder bogenförmigen Rohrabschnitts als auch im Bereich des knie- oder bogenförmigen Rohrabschnitts einen runden Querschnitt vor. Hierdurch ergeben sich besonders günstige Strömungsverhältnisse innerhalb der Ansaugleitung; die Bildung eines unerwünschten Flüssigkeitsnebels wird reduziert.

Bei einer weiteren, besonders bevorzugten Ausführungsform der Erfindung ist vorgesehen, dass dem ersten knie- oder bogenförmigen Rohrabschnitt ein zweiter knie- oder bogenförmiger Rohrabschnitt nachgeordnet ist. Über einen zweiten derartigen Rohrabschnitt wird erreicht, dass der Luftstrom nochmals umgelenkt wird, wobei noch in dem Luftstrom vorhandene Partikel des zu filternden Gutes so gelenkt werden, dass sie im zweiten knie-oder bogenförmigen Rohrabschnitt erneut auf den Flüssigkeitsstrom treffen und in diesen eintauchen. In dem zweiten knie- oder bogenförmigen Rohrabschnitt ist demnach ein zweiter Mischbereich vorgesehen, in dem noch einzelne, noch in dem Luftstrom vorhandene Partikel in den Flüssigkeitsstrom gemischt werden.

Eine vorteilhafte Ausführungsform ergibt sich dann, wenn die Ansaugleitung nach dem zweiten knie- oder bogenförmigen Rohrabschnitt weitgehend vertikal verläuft.

Der erste und ggf. auch der zweite knie- oder bogenförmige Rohrabschnitt weist einen Winkelbogen von vorteilhafterweise 90° auf. Denkbar ist, dass auch größere Winkel, insbesondere bis zu 120° vorgesehen werden können. Der zu wählende Winkel hängt hierbei von der Partikelgröße des zu filternden Gutes, von dem Durchfluss und der Strömungsgeschwindigkeit des Luftstromes als auch von dem Durchfluss und der Strömungsgeschwindigkeit des Flüssigkeitsstromes ab.

Die eingangs genannte Aufgabe wird außerdem durch eine Vorrichtung mit einer das Gut und den Luftstrom führenden Ansaugleitung gelöst, die sich dadurch kennzeichnet, dass die Ansaugleitung einen den Mischbereich aufweisenden Mischabschnitt aufweist, dass im Bereich des Mischabschnitts oder stromaufwärts des Mischabschnitts ein Zulauf für den Flüssigkeitsstrom in die Ansaugleitung vorgesehen ist, wobei in dem Mischabschnitt wenigstens zwei in Strömungsrichtung hintereinanderliegende Führungsmittel zur Führung des Flüssigkeitsstromes derart angeordnet sind, dass der von dem Zulauf kommende Flüssigkeitsstrom über das erste Führungsmittel fließt und sich auf das zweite Führungsmittel ergießt, wobei der Luftstrom zwischen dem ersten und dem zweiten Führungsmittel durchströmen kann. Zwischen den beiden Strömungsmitteln ist demnach eine Art Durchgang bzw. ein Spalt vorhanden. Der Durchgang wird von dem Flüssigkeitsstrom überströmt. Der Luftstrom passiert den Flüssigkeitsstrom im Bereich des Durchganges. Das in dem Luftstrom vorhandene Gut trifft demnach auf den Flüssigkeitsstrom, taucht in diesen ein und wird von diesem mitgeführt. Dadurch, dass der Luftstrom den Flüssigkeitsstrom durchdringt, wird der Flüssigkeitsstrom zwar verspritzt, eine Nebelbildung des Flüssigkeitsstromes tritt allerdings nicht auf. Durch Vorsehen von mehreren, in Strömungsrichtung hintereinanderliegenden Führungsmitteln durchdringt der das Gut führende Luftstrom den Flüssigkeitsstrom mehrfach, wodurch gewährleistet werden kann, dass sämtliche Partikel des Gutes in den Flüssigkeitsstrom eintauchen.

Eine derartige Vorrichtung hat den Vorteil, dass sie insbesondere zur Absaugung von sehr feinen Stäuben und von Flüssigkeitsnebel geeignet ist. Insbesondere sehr feine Partikel des Gutes tauchen bei mehrfacher Durchdringung des Flüssigkeitsstromes in diesen ein und werden von diesem mitgeführt.

Vorteilhafterweise ergießt sich der Flüssigkeitsstrom über die gesamte Breite des Mischabschnitts von einem Führungsmittel zu einem weiteren Führungsmittel. Dies hat den Vorteil, dass der zwangsgeführte, das Gut führende Luftstrom, den Flüssigkeitsstrom passieren muss.

Erfindungsgemäß ist vorteilhafterweise denkbar, dass die Führungsmittel als Führungsebenen ausgebildet und derart angeordnet sind, dass die dem Flüssigkeitsstrom zugewandten Seiten der Führungsebenen und die Längsachse des Mischabschnitts jeweils einen Winkel von weniger als 90°, und insbesondere einen Winkel im Bereich von 60° bis 85°, einschließen. Insbesondere beim Durchströmen des Flüssigkeitsstromes von oben nach unten über die Führungsmittel hat sich eine derartige Anordnung als besonders positiv erwiesen.

Vorteilhafterweise überdecken sich die Führungsmittel bei Betrachtung in Längsrichtung des Mischabschnitts gegenseitig.
Hierdurch wird erreicht, dass sich der Flüssigkeitsstrom von einem Führungsmittel auf das in Strömungsrichtung dahinterliegende Führungsmittel ergießt.

Die Führungsmittel in dem Mischbereich sind dabei gemäß dem bekannten Kugelbahnprinzip angeordnet. Eine Kugel würde der Schwerkraft folgend von einem strömungsaufwärtsliegenden Führungsmittel auf ein dahinter angeordnetes Führungsmittel treffen. Sie würde der Neigung dieses Führungsmittels folgen, und von diesem Führungsmittel auf ein weiteres Führungsmittel treffen. Die Bewegungslinie der Kugel stellt folglich eine Zick-Zack-Linie dar.

Die genannte Aufgabe wird auch durch eine Vorrichtung, insbesondere zur Durchführung des erfindungsgemäßen Verfahrens, mit einer das Gut und den Luftstrom führenden Ansaugleitung, gelöst, die sich dadurch gekennzeichnet, dass die Ansaugleitung einen den Mischbereich aufweisenden Mischabschnitt aufweist, dass im Bereich des Mischabschnitts oder stromaufwärts des Mischabschnitts ein Zulauf für den Flüssigkeitsstrom in die Ansaugleitung vorgesehen ist und dass stromaufwärts des Mischabschnitts und vorzugsweise auch stromaufwärts des Zulaufs Strömungsleitmittel vorgesehen sind, die den Luftstrom derart umleiten bzw. ablenken, dass das von dem Luftstrom mitgeführte Gut auf den Flüssigkeitsstrom prallt, in den Flüssigkeitsstrom eintaucht und von dem Flüssigkeitsstrom mitgeführt wird. Hierdurch wird ein gezieltes Eindringen des Gutes in den Flüssigkeitsstrom ermöglicht. Insbesondere kann der Winkel, unter welchem das Gut in den Flüssigkeitsstrom eindringt relativ genau vorherbestimmt werden. Die Strömungsleitmittel können beispielsweise flügel- oder spoilerartig ausgebildet sein. Bei im Querschnitt runden Ansaugleitungen kann das Strömungsleitmittel als wenigstens abschnittsweise umlaufende Sicke ausgebildet sein. Bei im Querschnitt rechteckigen Ansaugleitungen kann das Strömungsleitmittel als Leitblech oder als Leitflügel ausgebildet sein.

Eine vorteilhafte Ausgestaltung der Erfindung sieht vor, dass stromabwärts des Mischbereichs bzw. des Mischabschnitts eine Aufweitung der Ansaugleitung vorgesehen ist. Eine derartige, den Querschnitt der Ansaugleitung vergrößernde Aufweitung hat den Vorteil, dass nach dem Eintauchen des Guts in den Flüssigkeitsstrom sich der Luftstrom rasch beruhigt. Hierdurch wird eine Vermischung und ein Aufwirbeln von Flüssigkeit in den Luftstrom vermieden.

Vorteilhafterweise kann erfindungsgemäß vorgesehen sein, dass die Ansaugleitung stromaufwärts des Mischabschnitts weitgehend vertikal verläuft. Dadurch wirkt die Schwerkraft der Geschwindigkeit der in dem Luftstrom mitgeführten Partikeln des zu filternden Gutes nicht entgegen. Der Aufprall- und Eintaucheffekt des Gutes in die Flüssigkeit wird somit verbessert.

Bei einer weiteren Ausführungsform der Erfindung ist stromabwärts des ersten oder ggf. des zweiten knie- oder bogenförmigen Rohrabschnitts ein Sammelbehälter für das Gut angeordnet.

Bei einer Ausführungsform kann hierbei der Sammelbehälter als Siebkorb ausgebildet sein, durch den der das Gut enthaltende Flüssigkeitsstrom und auch der Luftstrom geführt wird. Aufgrund des Führens beider Ströme durch den Siebkorb wird gewährleistet, dass sämtliche in dem Luftstrom als auch in dem Flüssigkeitsstrom vorhandene Partikel des zu filternden Gutes den Siebkorb passieren. Demnach wird ausgeschlossen, dass Partikel des zu filternden Gutes die Vorrichtung verlassen können.

Bei einer anderen Ausführungsform der Erfindung ist als Sammelbehälter eine Zelle einer Schleuse, insbesondere einer Zellenradschleuse, vorgesehen. Diese Ausführungsform hat den Vorteil, dass aufgrund des Vorhandenseins der Schleuse die Vorrichtung kontinuierlich arbeiten kann, ohne dass zum Abführen des gefilterten Gutes die Anlage herunter gefahren werden muss.

Bei einer weiteren vorteilhaften Ausgestaltung der Erfindung trifft der das Gut enthaltende Flüssigkeitsstrom auf das in dem Sammelbehälter vorhandene Gut. Dies hat den Vorteil, dass bereits gesammeltes Gut nicht abtrocknet und unerwünschte chemische Reaktionen eingehen kann.

Erfindungsgemäß ist ferner denkbar, dass der Siebkorb über eine Filtervorrichtung mit einer Unterdruckquelle verbunden ist. Dadurch wird gewährleistet, dass sich in dem Siebkorb befindende Partikel an den Rändern bzw. an dem Boden des Siebkorbes festsetzen. Ferner können wider Erwarten den Siebkorb passierende Partikel aufgrund der Filtervorrichtung nicht in die Umgebung gelangen.

Um ein Trennen von Flüssigkeit und gefiltertem Gut zu erreichen, ist der Siebkorb oberhalb eines Flüssigkeitssammelbehälters angeordnet. Damit kann die in dem Siebkorb vorhandene, überschüssige Flüssigkeit in den Flüssigkeitssammelbehälter abtropfen. Stäube des Gutes, die mit der Flüssigkeit in den Flüssigkeitssammelbehälter gelangen, setzen sich vorteilhafterweise am Boden des Flüssigkeitssammelbehälters als Schlamm ab.

Um die Flüssigkeit zu dem Mischabschnitt bzw. zu der Zufuhr zu fördern wird vorteilhafterweise eine Schneckenpumpe eingesetzt. Die Schneckenpumpe hat hierbei den Vorteil, dass die Flüssigkeit nicht aufgeschäumt wird, was zu unerwünschten Flüssigkeitsnebeln in der Ansaugleitung führen kann. Ferner werden langkettige Moleküle der Flüssigkeit, wie sie in Ölen vorhanden sind, nicht durch den Pumpvorgang aufgetrennt.

Weitere vorteilhafte Ausgestaltungen und Einzelheiten sind der folgenden Beschreibung zu entnehmen, in der die Erfindung anhand der in der Zeichnung dargestellten Ausführungsbeispiele näher beschrieben und erläutert ist.

Es zeigen:
- Figur 1: eine schematische Darstellung einer ersten erfindungsgemäßen Vorrichtung in Seitenansicht,
- Figur 2: einen Ausschnitt der Ansaugleitung der Vorrichtung gemäß Fig. 1,
- Figur 2a: einen zu Fig. 2 alternativen Ausschnitt der Ansaugleitung der Vorrichtung gemäß Fig. 1,
- Figur 3: einen Schnitt durch Fig. 2 entlang der Linie III,
- Figur 4: eine schematische Darstellung einer zweiten erfindungsgemäßen Vorrichtung in Seitenansicht,
- Figur 5: den Mischabschnitt des Ansaugrohres der Vorrichtung gemäß Figur 4,
- Figur 6: einen Schnitt durch Figur 5 entlang der Linie VI,
- Figur 7: eine schematische Darstellung einer dritten Ausführungsform der Erfindung, und
- Figur 8: einen Rohrabschnitt einer erfindungsgemäßen Vorrichtung.

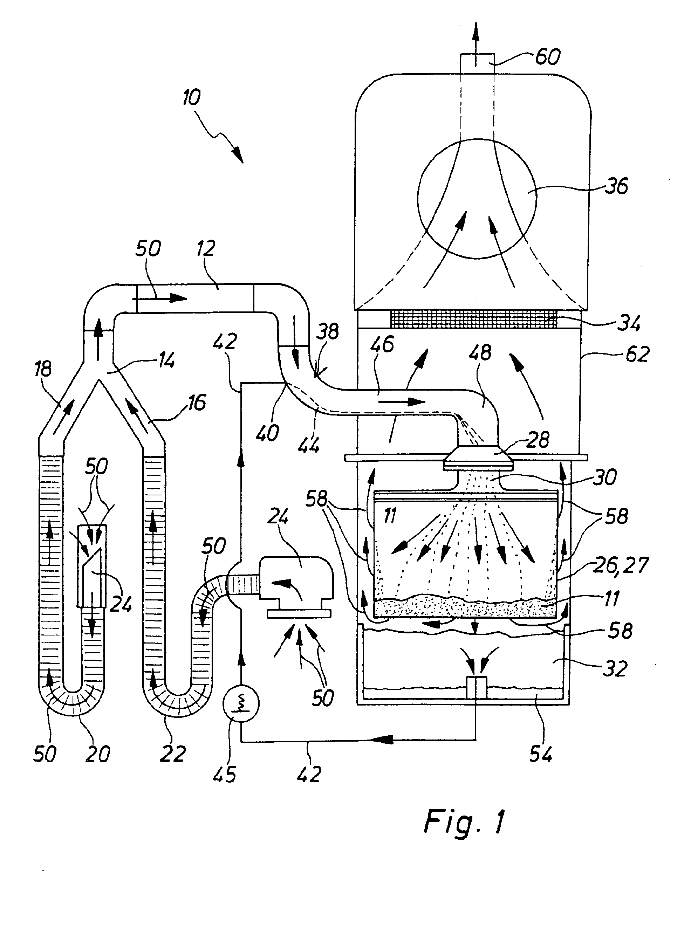

Die Fig. 1 zeigt eine erfindungsgemäße Vorrichtung 10 zum Filtern bei Bearbeitungsprozessen anfallendem brennbarem, staubförmigem und feinspanigem Gut 11 wie bspw. Aluminium oder Magnesium. Dargestellt ist eine Ansaugleitung 12, die eine Leitungsverzweigung 14 vorsieht, an deren Leitungsteilstücken 16 und 18 jeweils eine flexibel ausgebildete Saugleitung 20 und 22 angeordnet ist. Die freien Enden der Saugleitungen 20, 22 weisen verschiedenartig ausgebildete Saugköpfe 24 auf. Bei dem Saugkopf 24 der Saugleitung 22 handelt es sich bspw. um ein unmittelbar mit einem Schleif- oder Poliergerät verbindbaren Saugkopf 24.

Die Saugleitung 12 führt zu einem Sammelbehälter 26, der einen mit dem Ende der Saugleitung 28 luftdicht verbundenen Deckel 30 vorsieht. Der Deckel 30 als solcher ist luftundurchlässig ausgebildet.

Der Sammelbehälter 26 ist als Siebkorb 27 ausgebildet, der an der Bodenfläche als auch an der Mantelfläche luftdurchlässiges und sehr feines Siebmaterial vorsieht.

Der Siebkorb 27 ist oberhalb eines Flüssigkeitssammelbehälters 32 angeordnet. Oberhalb des Siebkorbes 27 ist über eine Luftfiltervorrichtung 34 ein Unterdruckerzeuger 36 angeordnet. Die Vorrichtung 10 sieht ein Unterdruckgehäuse 62 vor, innerhalb dessen der Siebkorb 27 und der Flüssigkeitssammelbehälter 32 untergebracht sind.

Die Ansaugleitung 12 sieht einen Mischabschnitt in Form eines Bogenabschnitt 38 vor, an dessen Außenseite ein Zulauf 40 für Flüssigkeit 42 angeordnet ist, die über eine Schneckenpumpe 45 aus dem Flüssigkeitssammelbehälter 32 gefördert wird. Die Flüssigkeit 42 ergießt sich folglich innerhalb des Bogenabschnitts 38 in die Ansaugleitung 12. Der innerhalb der Ansaugleitung 12 verlaufende Flüssigkeitsstrom trägt das Bezugszeichen 44. Der Flüssigkeitsstrom 44 fließt über einen weitgehend horizontalen Rohrabschnitt 46 und ergießt sich über einen zweiten Bogenabschnitt 48 in den Siebkorb 27.

Die Flüssigkeit ist vorteilhafterweise Öl, wobei sich Speiseöl für aluminium- und/oder magnesiumhaltiges Gut besonders eignet.

Im Betrieb der Vorrichtung 10 wird über den Unterdruckerzeuger 36 an den Saugköpfen 24 und in der Ansaugleitung 12 ein Luftstrom erzeugt, der durch Pfeile 50 angedeutet ist. Der Luftstrom 50 führt das zu fördernde und zu sammelnde Gut in Form von staub- und spanförmigem Aluminium- oder Magnesiumpartikel 11 mit sich. Die in dem Luftstrom 50 mitgeführten Partikel 11 treffen in einem Mischbereich 56 innerhalb des Bogenabschnitts 38 auf den Flüssigkeitsstrom 44, weshalb der Bogenabschnitt 38 den Mischabschnitt bildet. Aufgrund der relativ hohen Geschwindigkeit der von dem Luftstrom mitgeführten Partikel 11 und deren Trägheit dringen die Partikel 11 in den Flüssigkeitsstrom 44 ein und werden von diesem entlang des Rohrabschnitts 46 und des Bogenabschnitts 48 geführt bzw. gefördert. Die Partikel 11 verringern ihre Geschwindigkeit auf die Fließgeschwindigkeit des Flüssigkeitsstromes 44. Die Geschwindigkeit des Luftstromes 50 verringert sich nicht bzw. nur unwesentlich.

Über die innen liegende Seite des Bogenabschnitts 48 ergießt sich der die Partikel 11 mitführende Flüssigkeitsstrom 44 in den Siebkorb 27. Am Boden des Siebkorbes 27 sowie an dessen Wänden sammelt sich aufgrund des feinmaschigen Siebmaterials das mitgeführte Gut 11.

Von dem Siebkorb 27 tropft die Flüssigkeit in den Flüssigkeitssammelbehälter 32. Sehr feine Partikel, insbesondere Stäube des Gutes 11 passieren mit der Flüssigkeit den Siebkorb 26 und sammeln sich als Schlamm 54 im Bereich des Bodens des Flüssigkeitssammelbehälters 32.

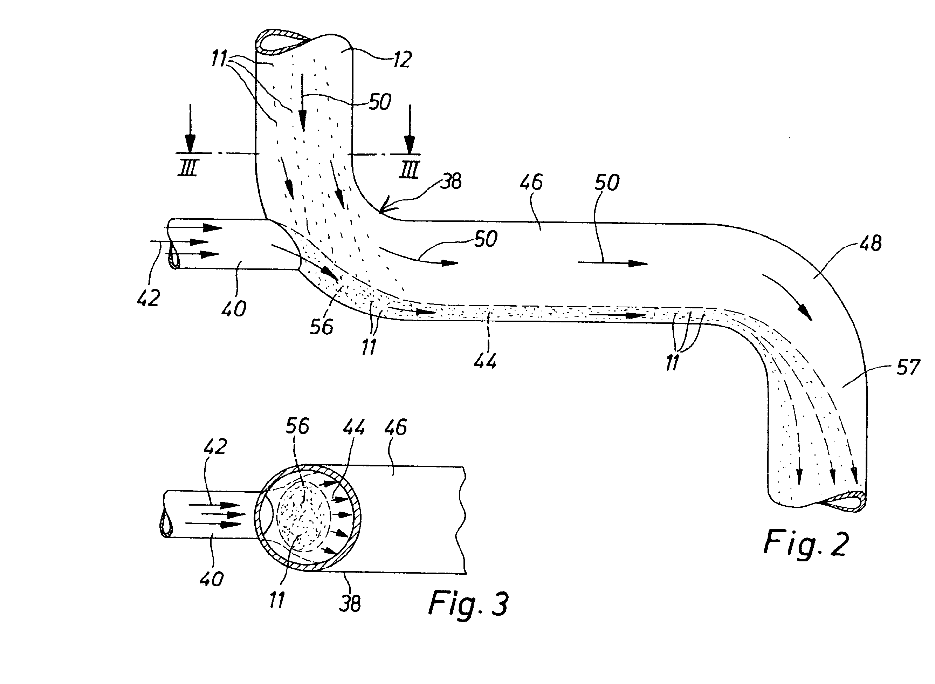

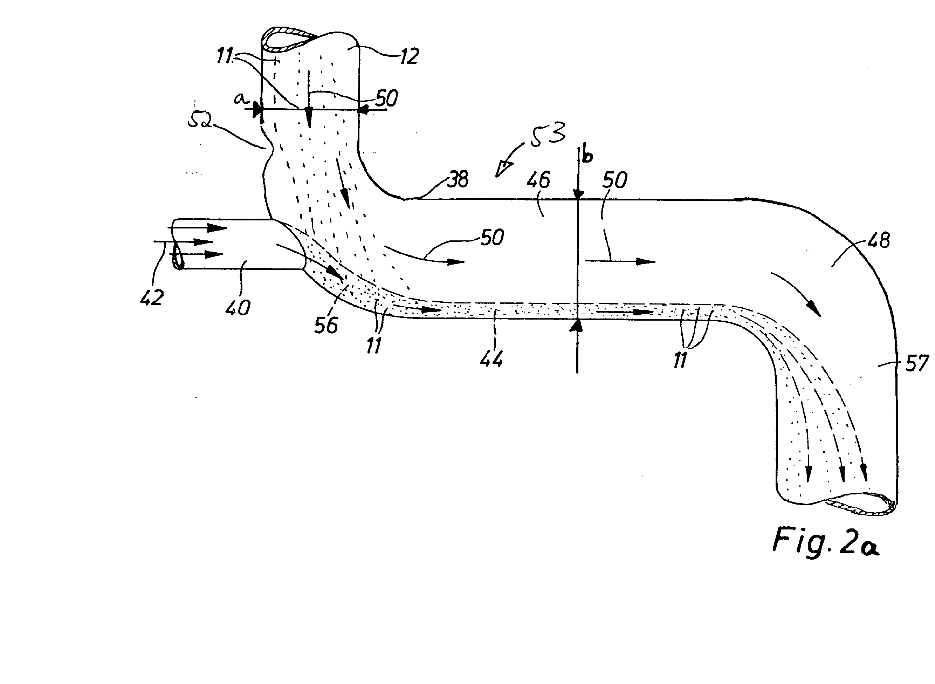

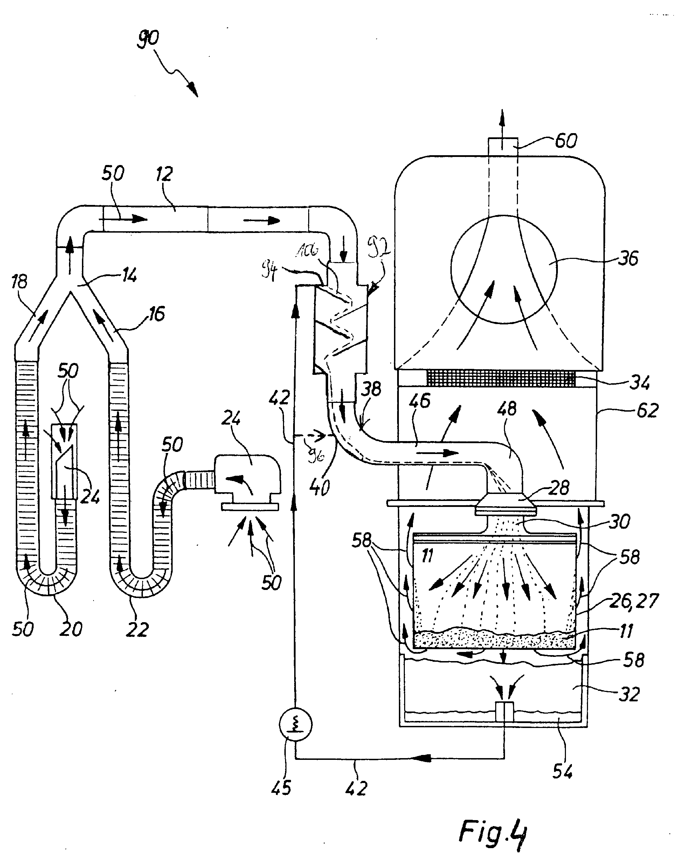

In der Fig. 2 und 3 ist der Bogenabschnitt 38 mit dem Zulauf 40 vergrößert dargestellt. Deutlich zu erkennen ist, wie sich die Flüssigkeit 42 aus dem Zulauf 40 in den Bogenabschnitt 38 ergießt. Die Flüssigkeit 42 wird so in den Abschnitt 38 eingeführt, dass nach Möglichkeit keine Zerstäubung der Flüssigkeit stattfindet. Vielmehr bildet sich innerhalb der Abschnitte 38, 46 und 48 der Ansaugleitung 12 ein Flüssigkeitsstrom 44 mit idealerweise einer geschlossenen Oberfläche. Die Strömungsverhältnisse von Flüssigkeitsstrom 44 und Luftstrom 50 sind in den Rohrabschnitten 38, 46 und 48 vorzugsweise laminar. Die Flüssigkeit 42 fließt vorzugsweise mit einer relativ geringen Fließgeschwindigkeit von 0,1 - 0,2 m/s und einem Volumenstrom von ca. 6 l/m in den Bogenabschnitt 38 ein. Dabei bleibt die Fließkontur des Flüssigkeitsstroms vorzugsweise stabil und wird nicht abgerissen. Bei der genannten Fließgeschwindigkeit beträgt die Geschwindigkeit des Luftstromes ca. 30 - 40 m/s und der Volumenstrom der Luft vorteilhafterweise 150 - 400 m³/h und insbesondere 200 - 300 m³/h.

Aufgrund des höheren spezifischen Gewichts und der Trägheit der in dem Luftstrom 50 mitgeführten Partikel 11, die eine Geschwindigkeit von ca. 20 - 25 m/s haben, findet eine Umlenkung-der Partikel 11 entlang des Bogenabschnitts 38 nicht statt. Die Partikel 11 prallen im Mischbereich 56 auf den Volumenstrom 44. Der Luftstrom 50, ohne die mitgeführten Partikel, wird an der Oberfläche des Flüssigkeitsstromes 44 abgelenkt und strömt vorzugsweise im Rohrbereich 46 laminar oberhalb des Flüssigkeitsstromes 44. Die Krümmung des Bogenabschnitts 38 sowie die Stelle, an welcher der Zulauf 40 angeordnet ist, wird vorteilhafterweise so gewählt, dass möglichst wenig Turbulenzen und eine sehr geringe bzw. idealerweise keine Verwirbelung und Zerstäubung des Flüssigkeitsstromes 44 in der Ansaugleitung 12 stattfindet.

Die Flüssigkeit bzw. das Öl 42 sollte hierbei eine derartige Konsistenz aufweisen, dass sie bzw. es einerseits das Eindringen des eingesaugten Gutes ermöglicht und andererseits nicht zum Zerstäuben neigt.

Die Ansaugleitung 12 und insbesondere der Bogenabschnitt 38 weist, wie aus Fig. 3 hervorgeht, einen kreisrunden Querschnitt auf. Über die Bögenabschnitte 38 und 48 wird der Luftstrom 50 jeweils um 90° umgelenkt. Erfindungsgemäß ist auch denkbar, eine Umlenkung um mehr als 90° vorzusehen, bspw. um bis zu 120°.

Sollten dennoch Partikel des angesaugten Gutes nicht im Mischbereich 56 in den Flüssigkeitsstrom 44 eindringen, sondern mit dem Luftstrom 50 in den Rohrabschnitten 46 und 48 mitgeführt werden, so treten sie in dem stromabwärts liegenden Abschnitt 48 in den Flüssigkeitsstrom 44 ein. Fig. 2 zeigt deutlich, dass sich der Flüssigkeitsstrom 44 im Bereich des zweiten bogenförmigen Abschnitts 48 über den gesamten Querschnitt der Ansaugleitung ergießt. Der Flüssigkeitsstrom 44 weist aufgrund seiner geringen Strömungsgeschwindigkeit einen ruhigen Verlauf auf, wobei der Luftstrom 50 in einem zweiten Mischbereich 57 nochmals auf den Flüssigkeitsstrom 44 trifft. Noch unbenetztes, nicht in dem Flüssigkeitsstrom 44 enthaltenes Gut 11 dringt auch an dieser Stelle in den Flüssigkeitsstrom 44 ein.

Die Erfindung hat hierbei den Vorteil, dass gewährleistet wird, dass das angesaugte Gut in die Flüssigkeit eindringt und damit von der Flüssigkeit vollständig benetzt bzw. beschichtet wird. Eine unerwünschte chemische Reaktion des Gutes mit insbesondere Sauerstoff wird damit sicher unterbunden.

Das Zuführen des Flüssigkeitsstromes 44 in dem Bogenabschnitt 38 hat ferner den Vorteil, dass der dem ankommenden Luftstrom 50 gegenüberliegende, unterhalb des Mischbereichs 56 liegende Wandungsabschnitt des Bogens 48 vor auf die Wandung auftreffendem Gut 11 geschützt ist. Hierdurch verringert sich der Verschleiß des Bogenabschnitts 38.

In dem weitgehend horizontalen Rohrabschnitt 46 wird der Luftstrom 50 möglichst parallel zu dem Flüssigkeitsstrom 44 zwangsgeführt, so dass eine Wirbelbildung und eine Zerstäubung der Flüssigkeit unterbunden wird. Das Vermeiden einer Zerstäubung der Flüssigkeit hat den Vorteil, dass ein aufwendiges Ausfiltern eines Flüssigkeitsnebels nicht erforderlich ist.

In der Fig. 2a, die eine alternative Ausgestaltung zu Fig. 2 zeigt, ist vorgesehen, dass stromaufwärts des Mischabschnitts 38 und auch'stromaufwärts des Zulaufs 40 ein Strömungsleitmittel 52 in Form einer Sicke vorgesehen ist, die den Luftstrom 50 derart ablenkt, dass das mitgeführte Gut 11 unter einem vorteilhaften Eintauchwinkel auf den Flüssigkeitsstrom 44 prallt. Anstelle einer Sicke 52 kann auch ein eine entsprechende Wirkung erzielender Flügel oder Spoiler verwendet werden. In der Fig. 2a weist im Gegensatz zu der Fig. 2 die Ansaugleitung stromabwärts des Mischbereichs 56 bzw. des Mischabschnitt 38 eine Aufweitung 53 auf. Die Aufweitung resultiert aus dem Durchmesser b des horizontal verlaufenden Rohrabschnitts 46, der größer ist als der Durchmesser a des vertikal verlaufenden Rohrabschnitts oberhalb des Strömungsleitmittels 52. Eine derartige, den Querschnitt der Ansaugleitung vergrößernde Aufweitung 53 hat den Vorteil, dass nach'dem Eintauchen des Guts 11 in den Flüssigkeitsstrom 44 sich der Luftstrom 50 rasch beruhigt.

Auch die in den Fig. 4 bis 8 dargestellten Ausführungsformen der Erfindung können mit Strömungsleitmittel 52 und/oder Aufweitungen 53 ausgebildet sein.

Die Verwendung einer Schneckenpumpe 45 trägt außerdem dazu bei, dass ein Aufschäumen und Zerstäuben der Flüssigkeit nicht auftritt. Ferner wird verhindert, dass die Flüssigkeit ihre chemischen Eigenschaften ändert. Insbesondere bei Verwendung von Öl als Flüssigkeit kann es bei anderen Pumpenarten, bspw. einer Kreiselpumpe, zu unerwünschten chemischen Veränderungen des Öls kommen, insbesondere können langkettige Moleküle aufgetrennt werden.

Der gesamte in den Siebkorb 26 gelangende Luftstrom 50 passiert den Boden als auch die Wände des Siebkorbes 27. Dadurch wird gewährleistet, dass kein von dem Luftstrom 50 mitgeführtes Gut aus dem Siebkorb 27 gelangen kann. Nach dem Passieren des Siebkorbes 27 ist der Luftstrom in Fig. 1 mit der Bezugszahl 58 gekennzeichnet. Der Luftstrom 58 passiert bevor er über den Unterdruckerzeuger 36 einem Luftauslass 60 zugeführt wird sicherheitshalber noch die Luftfiltervorrichtung 34. Hierdurch wird gewährleistet, dass in der Abluft keine Partikel des abgesaugten Gutes 11 mehr vorhanden sein können.

Die sich in dem Siebkorb 27 ansammelnden Partikel 11 sind erfindungsgemäß vollständig mit der Flüssigkeit beschichtet. Eine unerwünschte chemische Reaktion der Partikel 11 mit insbesondere Sauerstoff kann demnach nicht stattfinden.

Die in den Figuren 4 bis 6 gezeigte Vorrichtung 90 entspricht im Wesentlichen der in den Figuren 1 bis 3 gezeigten Vorrichtung 10. Entsprechende Bauteile sind mit entsprechenden Bezugszeichen versehen. Die Ansaugleitung 12 weist bei der Vorrichtung 90 einen Mischabschnitt 92 auf, dessen Längsachse vertikal verläuft. Auf der stromaufwärts gelegenen Seite weist der Mischabschnitt 92 einen Zulauf 94 für den Flüssigkeitsstrom 42 auf. Entsprechend der Vorrichtung 10 kann bei der Vorrichtung 90 vorgesehen sein, dass ein weiterer Zulauf 40 im Bogenabschnitt 38 vorgesehen ist. Eine Abzweigung 96 von dem Flüssigkeitsstrom 42 zu dem Zulauf 40 ist deshalb gestrichelt dargestellt.

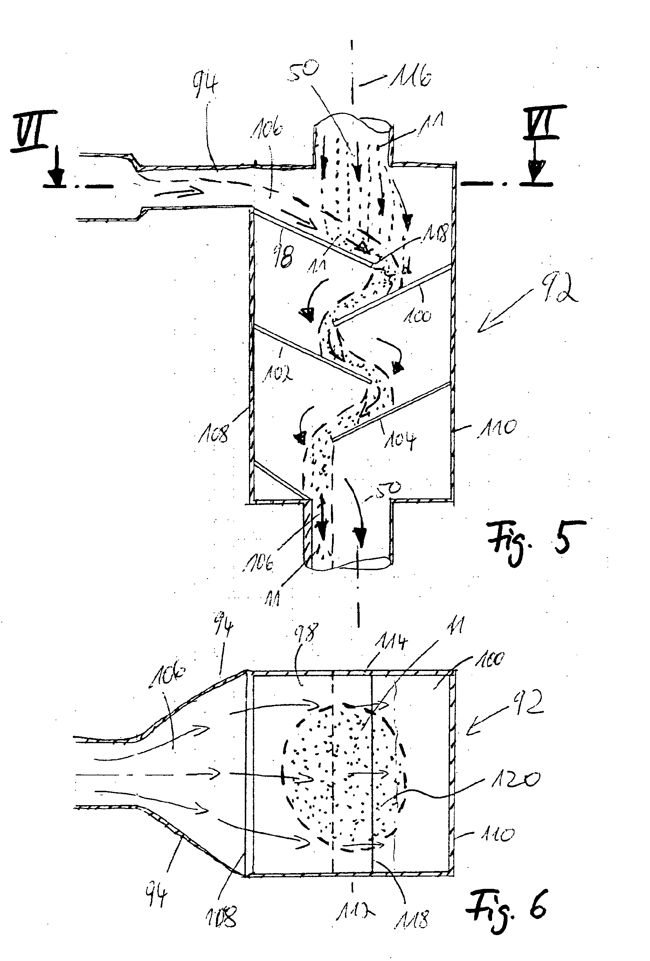

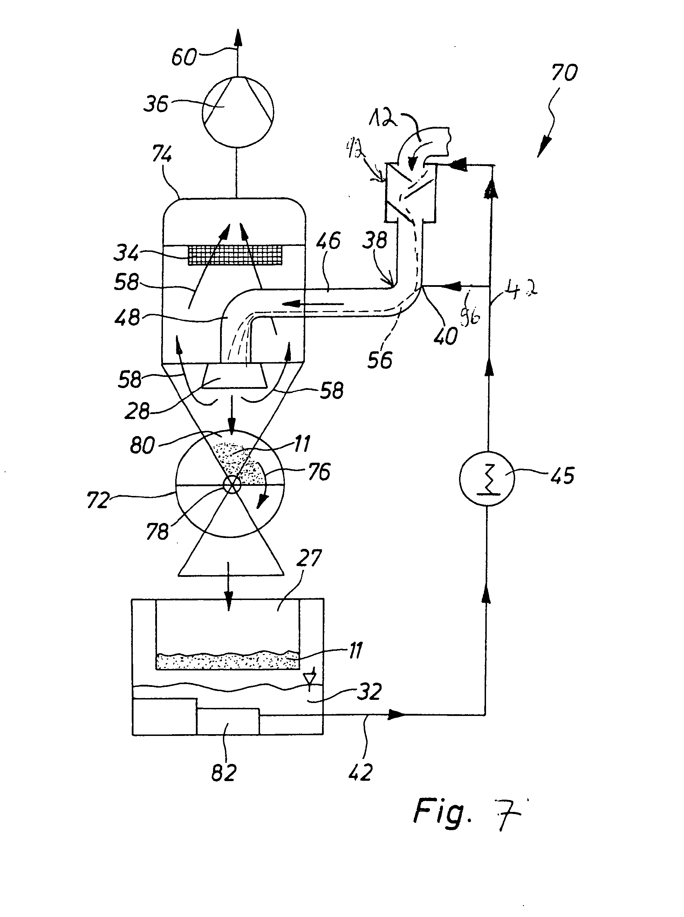

Der in der Figur 5 vergrößert dargestellte Mischabschnitt 92 sieht insgesamt vier in Strömungsrichtung hintereinanderliegend angeordnete Führungsmittel in Form von Führungsebenen 98, 100, 102 und 104 zur Führung des Flüssigkeitsstromes, der innerhalb des Mischabschnitts mit dem Bezugszeichen 106 gekennzeichnet ist, vor. Wie aus Figur 6 hervorgeht, ist der Mischabschnitt 92 im Querschnitt rechteckig ausgebildet und weist vier Seitenwandungen 108, 110, 112 und 114 auf. Die Führungsebenen 98 und 102 sind an der Seitenwandung 108 und die Führungsebenen 100 und 104 an der Seitenwandung 110 angeordnet. Die Führungsebenen 98, 102 bzw. 100, 104 erstrecken sich dabei über die gesamte, zur Längsachse 116 quer verlaufenden Breite der Seitenwandungen 108 bzw. 110. Die Führungsebenen 98, 100, 102 und 104 sind derart an den Seitenwandungen 108 bzw. 110 angeordnet, dass sie und die Längsachse 116 des Mischabschnitts 92 jeweils einen Winkel von ca. 60° einschließen. Dabei verlaufen die Schnittlinien der Führungsebenen 98, 100, 102 und 104 mit der jeweiligen Seitenwandung 108 bzw. 110 parallel zueinander. Die Führungsebenen 98 und 102 sowie die Führungsebenen 100 und 104 sind jeweils parallel zueinander angeordnet. Zwischen jeweils zwei in Strömungsrichtung hintereinanderliegenden Führungsebenen ist jeweils ein Spalt d vorgesehen.

Wie in der Figur 5 dargestellt ist, strömt der von dem Zulauf 94 kommende Flüssigkeitsstrom 106 über die Führungsebene 98 und ergießt sich über die freie Kante 118 der Führungsebene 98 auf die Führungsebene 100. Aufgrund der fischgrätenartig zueinander versetzten, sich gegenseitig überdeckenden Anordnung der Führungsebenen 98, 100, 102 und 104 ändert der Flüssigkeitsstrom 106 auf der Führungsebene 100 seine Strömungsrichtung. Er ergießt sich über die freie Kante der Führungsebene 100 auf die Führungsebene 102. Von dort ergießt er sich auf die Führungsebene 104, von welcher er den Mischabschnitt 92 verläßt.

Die Anordnung der Führungsebenen 98, 100, 102 und 104 entspricht der Anordnung von Führungsschienen einer Kugelbahn. Eine auf die Führungsebene 98 aufgelegte Kugel würde von dieser auf die Führungsebene 100 rollen, von dieser auf die Führungsebene 102 und von dieser auf die Führungsebene 104. Die Anordnung kann deshalb auch als Kugelbahn prinzipartig bezeichnet werden.

Der das Gut 11 führende Luftstrom 50 trifft im Bereich der Führungsebene 98 auf den Flüssigkeitsstrom 106. Aufgrund des hohen Gewichts und der Trägheit des Gutes 11 dringt dieses in den Flüssigkeitsstrom 106 ein. Der Luftvolumenstrom 50 muss beim Passieren des Mischabschnitts 92 durch die Spalte d zwischen den jeweils hintereinanderliegenden Führungsebenen hindurchdringen. Dabei passiert der Luftstrom 50 mit dem darin enthaltenen Gut 11 den Flüssigkeitsstrom 106 mehrfach. Sämtliche in dem Luftstrom 50 enthaltende Partikel 11 werden von dem Flüssigkeitsstom 106 aufgenommen. Stromabwärts des Mischabschnitts 92 enthält der Luftstrom 50 keinerlei Gut 11. Das Gut 11 befindet sich in dem Flüssigkeitsstrom 106.

Beim Durchtreten des Luftstromes 50 durch den Flüssigkeitsstrom 106 kommt es zum Zerspritzen des Flüssigkeitsstromes 106. Ein unerwünschtes, feines Zerstäuben des Flüssigkeitsstromes 106 tritt allerdings nicht auf. Nach Verlassen des Mischabschnitts 92 kommt es zu einer Beruhigung des das Gut 11 führenden Flüssigkeitsstromes 106 und des Luftstromes 50, in dem Luftstrom 50 enthaltene Flüssigkeitsstropfen vermischen sich mit dem Flüssigkeitsstrom 106.

Der in den Figuren 4 - 6 dargestellte Mischbereich 92 eignet sich insbesondere für staubförmiges Gut. Ferner ist er geeignet, nebelartiges Gut mit dem Flüssigkeitsstrom zu mischen bzw. in dem Flüssigkeitsstrom zu binden. Dabei kann der Flüssigkeitsstrom aus einem identischen Stoff wie das nebelförmige Gut sein.

Ferner eignet sich der Mischabschnitt 92 zur Absaugung von Funken, die beispielsweise bei einer Metallbearbeitung entstehen können. Hierbei empfiehlt sich als Flüssigkeit Wasser.

In der Figur 6 ist der Mischbereich, in dem die in dem Lufstrom 50 mitgeführten Partikel erstmals auf den Flüssigkeitsstrom 106 stoßen, mit der Bezugszahl 120 gekennzeichnet. Wie aus Figur ferner hervorgeht, ist die Zuleitung 94 derart ausgebildet, dass der Flüssigkeitsstrom über die gesamte Breite der Wandung 108 bzw. der Führungsebene 98 fließt.

Die Führungsebenen sind in den Figuren 5 und 6 ohne Krümmungen dargestellt. Denkbar ist, dass die Führungsebenen gekrümmt ausgebildet sind. Ferner ist nicht zwingend, dass die freien Kanten, wie dargestellt, geradlinig verlaufen. Denkbar ist auch, den Mischabschnitt 92 im Querschnitt nicht rechteckig, sondern rund auszubilden.

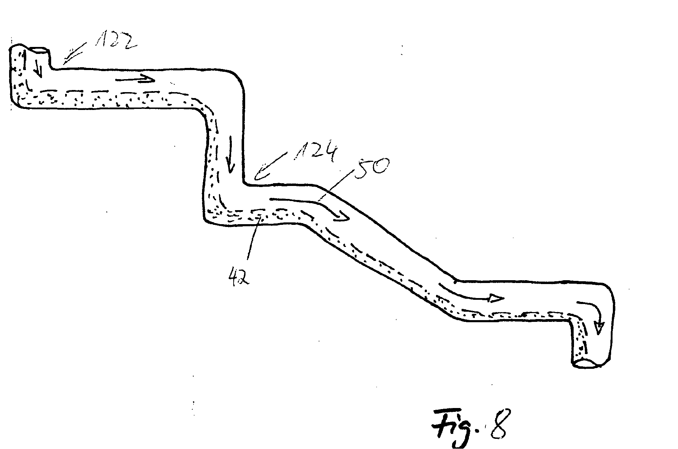

Die Fig. 7 zeigt eine dritte erfindungsgemäße Vorrichtung 70, bei der der Vorrichtung 10 und 90 entsprechende Teile mit entsprechenden Bezugszahlen gekennzeichnet sind. Dabei saugt der Unterdruckerzeuger 36 über ein Unterdruckgehäuse 74 Luft über die Ansaugleitung 12 an. Das Unterdruckgehäuse 74 ist gegenüber der Atmosphäre dicht abgeschlossen.

Unterhalb des Endes 28 der Ansaugleitung 12 trifft der das Gut 11 enthaltende Flüssigkeitsstrom 44 auf einen Sammelbehälter 26 in Form einer Zelle 80 einer Zellenradschleuse 72. Die von der Flüssigkeit umgebenen Partikel 11 des abgesaugten Gutes 11 sammeln sich in der Zelle 80. Der der Ansaugleitung 12 entweichende Luftstrom 58 wird über die Filtervorrichtung 34 der Abluft 60 zugeführt. Die in der Schaufel 80 vorhandenen Partikel 11 werden über die Zellenradschleuse 72 dem Siebkorb 27 zugeführt. Anstelle einer Zellenradschleuse 72 kann auch eine andere bekannte Schleuse Verwendung finden.

Nachdem die Zelle 80, in der sich die Partikel 11 und die Flüssigkeit 44 befinden, einen gewissen Füllstand erreicht hat, wird die Zellenrädschleuse 72 in Richtung des Pfeiles 76 um die Achse 78 gedreht. Damit werden die Partikel 11 samt aufgefangener Flüssigkeit ohne Druckverlust innerhalb des Unterdruckgehäuses 74 in den Siebkorb 26 gefördert.
Unterhalb des Siebkorbes 26 befindet sich der Flüssigkeitssammelbehäler 32, in dem sich die Flüssigkeit 44 sammelt. Am Boden des Flüssigkeitssammelbehälters 32 ist ein Kaskadenabschneider 82 dargestellt.

Vorteil einer derartigen Vorrichtung 70 ist, dass sie kontinuierlich betrieben werden kann. Über die Zellenradschleuse 72 wird der über den Unterdruckerzeuger 36 erzeugte Unterdruck beim Entleeren der jeweiligen Schaufel aufrechterhalten. Eine Abschaltung der Vorrichtung 70 zum Abführen der gefilterten und gesammelten Partikel 11 ist demnach nicht erforderlich.

Bei den dargestellten Vorrichtungen 10 und 70 befindet sich der erste bogenförmige Abschnitt 38 relativ nahe an dem jeweiligen Sammelbehältnis. Um eine unerwünschte Reaktion des Gutes schon früher zu vermeiden, kann der Flüssigkeitsstrom auch in einem dem Sammelbehältnis fern gelegenen Bereich der Ansaugleitung zugeführt werden. Der Flüssigkeitsstrom fördert dann das Gut, wie in der Figur 8 dargestellt, über die entsprechende Strecke der Absaugleitung in vorzugsweise ruhigem Verlauf, ohne wesentlicher Änderung seiner Fließstruktur.

Die dargestellte Absaugleitung sieht zwei Mischabschnitte 122 in Form von knie- oder bogenförmigen Rohrabschnitten vor, in denen in dem Luftstrom mitgeführte Partikel 11 aufgrund ihrer Trägheit in den Flüssigkeitsstrom 42 eintauchen und von diesem mitgeführt werden. Die Mischabschnitte 122 und 124 entsprechen demnach dem Mischabschnitt 38, wie er in Figur 2 dargestellt ist.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Die Erfindung betrifft ein Verfahren zum Absaugen, Fördern und/oder Sammeln von bei Bearbeitungsprozessen anfallendem Gut, insbesondere brennbarem, feinspanigem, staub- und/oder nebelförmigem Gut aus Metall, Aluminium, Magnesium, Graphit, Fluid, Öl o.dgl., das in einem Luftstrom angesaugt, mit einer Flüssigkeit in Berührung gebracht und danach gesammelt wird, **dadurch gekennzeichnet, dass** die Flüssigkeit als Flüssigkeitsstrom (44, 106) in einen Mischbereich (56, 57, 120) geführt wird, dass das angesaugte Gut (11) im Mischbereich (56, 57, 120) so geführt wird, dass es auf den Flüssigkeitsstrom (44, 106) prallt, in den Flüssigkeitsstrom (44, 106) eintaucht und von dem Flüssigkeitsstrom (44, 106) mitgeführt wird.

2. Verfahren nach Anspruch 1, **dadurch gekennzeichnet, dass** der Flüssigkeitsstrom (44, 106) mit großem Volumen, insbesondere mit ca. 4 - 8 l/min und geringer Geschwindigkeit, insbesondere mit 0,1 - 0,2 m/s, strömt.

3. Verfahren nach Anspruch 1 oder 2, **dadurch gekennzeichnet, dass** die Geschwindigkeit des Luftstromes (50) ca. 30 bis 40 m/s beträgt.

4. Verfahren nach Anspruch 1, 2 oder 3, **dadurch gekennzeichnet, dass** der das Gut (11) enthaltende Flüssigkeitsstrom (44) und der Luftstrom (50) im Anschluss an den Mischbereich (56, 57) durch wenigstens einen Filter (26, 27) geführt wird, in dem das Gut (11) gesammelt wird.

5. Verfahren nach einem der vorhergehenden Ansprüche, **dadurch gekennzeichnet, dass** die Flüssigkeit (44) Öl, insbesondere Speiseöl, oder Wasser, ist.

6. Vorrichtung (10, 70), insbesondere zur Durchführung des Verfahrens nach einem der vorhergehenden Ansprüche, mit einer das Gut (11) und den Luftstrom (50) führenden Ansaugleitung (12), **dadurch gekennzeichnet, dass** die Ansaugleitung (12) einen den Mischbereich (56) aufweisenden Mischabschnitt (38) aufweist, dass im Bereich des Mischabschnitts (38, 122, 124) oder stromaufwärts des Mischabschnitts (38, 122, 124) ein Zulauf (40) für den Flüssigkeitsstrom (44) in die Ansaugleitung (12) vorgesehen ist und dass der Mischabschnitt (38, 122, 124) als ein erster knie- oder bogenförmigen Rohrabschnitt (38, 122, 124) ausgebildet ist.

7. Vorrichtung (10, 70) nach Anspruch 6, **dadurch gekennzeichnet, dass** die Ansaugleitung (12) und der Mischabschnitt (38, 122, 124) einen runden Querschnitt aufweisen.

8. Vorrichtung (10, 70) nach Anspruch 6 oder 7, **dadurch gekennzeichnet, dass** dem ersten knie- oder bogenförmigen Mischabschnitt (38) wenigstens ein zweiter knie- oder bogenförmigen Mischabschnitt (48, 122, 124) nachgeordnet ist.

9. Vorrichtung (10, 70) nach einem der Ansprüche 6 bis 8, **dadurch gekennzeichnet, dass** der erste und ggf. der zweite knie- oder bogenförmigen Mischabschnitt (38, 48, 122, 134) einen Winkel von 90° bis 120° aufweist.

10. Vorrichtung (90, 70), insbesondere zur Durchführung des Verfahrens nach einem der Ansprüche 1 bis 5, mit einer das Gut (11) und den Luftstrom (50) führenden Ansaugleitung (12), **dadurch gekennzeichnet, dass** die Ansaugleitung (12) einen den Mischbereich (120) aufweisenden Mischabschnitt (92) aufweist, dass im Bereich des Mischabschnitts (92) oder stromaufwärts des Mischabschnitts (92) ein Zulauf (94) für den Flüssigkeitsstrom (106) in die Ansaugleitung (12) vorgesehen ist, wobei in dem Mischabschnitt (92) wenigstens zwei in Strömungsrichtung hintereinander liegende Führungsmittel (98, 100, 102, 104) zur Führung des Flüssigkeitsstromes (106) derart angeordnet sind, dass der von dem Zulauf (94) kommenende Flüssigkeitsstrom (106) über das erste Führungsmittel (98) fließt und sich auf das zweite Führungsmittel (100) ergießt, wobei der Luftstrom (50) zwischen dem ersten und dem zweiten Führungsmittel (98, 100, 102, 104) durchströmen kann.

11. Vorrichtung (90) nach Anspruch 10, **dadurch gekennzeichnet, dass** sich der Flüssigkeitsstrom (106) in Strömungsrichtung über die gesamte, zur Längsachse (116) quer verlaufendenz Breite des Mischabschnitts (92) von einem Führungsmittel (98) zu einem weiteren Führungsmittel (100) ergießt.

12. Vorrichtung (90) nach einem der Ansprüche 10 oder 11 **dadurch gekennzeichnet, dass** die Führungsmittel (98, 102 bzw. 100, 104) sich jeweils von einer Wandung (108 bzw. 110) des Mischabschnitts (92) in Richtung der gegenüberliegenden Wandung (110 bzw. 108) des Mischabschnitts (92) erstrecken.

13. Vorrichtung (90) nach einem der Ansprüche 10, 11 oder 12, **dadurch gekennzeichnet, dass** die Führungsmittel (108, 110, 112, 114) als Führungsebenen ausgebildet und derart angeordnet sind, dass sie und die Längsachse (116) des Mischabschnitts (92) jeweils einen Winkel von weniger als 90°, und insbesondere einen Winkel im Bereich von 40° bis 850, einschließen.

14. Vorrichtung (90) nach einem der Ansprüche 10 bis 13, **dadurch gekennzeichnet, dass** sich die Führungsmittel (108, 110, 112, 114) bei Betrachtung in Längsrichtung (116) des Mischabschnitts (92) gegenseitig überdecken und/oder dass die Längsrichtung (116) vorzugsweise vertikal verläuft.

15. Vorrichtung (90) nach einem der Ansprüche 10 bis 14, **dadurch gekennzeichnet, dass** der Querschnitt des Mischabschnitts (92) rechteckförmig ausgebildet ist und dass die Führungsmittel (108, 110, 112, 114) rechteckförmige Führungsebenen sind.

16. Vorrichtung (10, 70), insbesondere zur Durchführung des Verfahrens nach einem der Ansprüche 1 bis 5, mit einer das Gut (11) und den Luftstrom (50) führenden Ansaugleitung (12), **dadurch gekennzeichnet, dass** die Ansaugleitung (12) einen den Mischbereich (56) aufweisenden Mischabschnitt (38) aufweist, dass im Bereich des Mischabschnitts (38, 122, 124) oder stromaufwärts des Mischabschnitts (38, 122, 124) ein Zulauf (40) für den Flüssigkeitsstrom (44) in die Ansaugleitung (12) vorgesehen ist und dass stromaufwärts des Mischabschnitts (38, 122, 124) und vorzugsweise auch stromaufwärts des Zulaufs (40) Strömungsleitmittel (52) vorgesehen sind, die den Luftstrom (50) derart umleiten bzw. ablenken, dass das von dem Luftstrom (50) mitgeführte Gut (11) auf den Flüssigkeitsstrom (44, 106) prallt, in den Flüssigkeitsstrom (44, 106) eintaucht und von dem Flüssigkeitsstrom (44, 106) mitgeführt wird.

17. Vorrichtung (70) nach wenigstens einem der Ansprüche 6 bis 9 und/oder wenigstens einem der Ansprüche 10 bis 15 und/oder dem Anspruch 16.

18. Vorrichtung (10, 70, 90) nach einem der Ansprüche 6 bis 17, **dadurch gekennzeichnet, dass** stromabwärts des Mischbereichs (56) bzw. des Mischabschnitt (38, 122, 124) eine Aufweitung (53) der Ansaugleitung vorgesehen ist.

19. Vorrichtung (10, 70, 90) nach einem der Ansprüche 6 bis 18, **dadurch gekennzeichnet, dass** die Ansaugleitung (12) stromaufwärts des Mischabschnitts (38, 122, 124) weitgehend vertikal verläuft.

20. Vorrichtung (10, 70, 90) nach einem der Ansprüche 6 bis 19, **dadurch gekennzeichnet, dass** die Ansaugleitung (12) stromabwärts des Mischabschnitts (48, 92) weitgehend vertikal verläuft.

21. Vorrichtung (10, 70, 90) nach einem der Ansprüche 6 bis 20, **dadurch gekennzeichnet, dass** stromabwärts des Mischabschnitts bzw. der Mischabschnitte (38, 48, 92, 122, 124) ein Sammelbehälter (26, 27, 80) für das Gut (11) angeordnet ist.

22. Vorrichtung (10, 70, 90) nach Anspruch 21, **dadurch gekennzeichnet, dass** der Sammelbehälter (26) ein Siebkorb (27) ist, durch den der das Gut (11) enthaltende Flüssigkeitsstrom (44) und der Luftstrom (50) geführt wird.

23. Vorrichtung (10, 70, 90) nach einem der Ansprüche 21 oder 22, **dadurch gekennzeichnet, dass** der Sammelbehälter eine sich in einen Siebkorb (26) ergießende Zelle (80) einer Schleuse (72) ist.

24. Vorrichtung (10, 70, 90) nach einem der Ansprüche 21, 22 oder 23, **dadurch gekennzeichnet, dass** der das Gut (11) enthaltende Flüssigkeitsstrom (44, 106) auf das in dem Sammelbehälter (26, 80) vorhandene Gut (11) trifft.

25. Vorrichtung (10, 70, 90) nach wenigstens einem der Ansprüche 21 bis 24, **dadurch gekennzeichnet, dass** der Siebkorb (26) über eine Filtervorrichtung (34) mit einer Unterdruckquelle (36) verbunden ist.

26. Vorrichtung (10, 70, 90) nach wenigstens einem der Ansprüche 21 bis 25, **dadurch gekennzeichnet, dass** unterhalb des Siebkorbes (26) ein Flüssigkeitssammelbehälter (32) angeordnet ist.

27. Vorrichtung (10, 70, 90) nach Anspruch 26, **dadurch gekennzeichnet, dass** eine Pumpe (45), insbesondere eine Schneckenpumpe vorgesehen ist, die die Flüssigkeit (42) insbesondere aus dem Flüssigkeitssammelbehälter (32) zu der Zufuhr (40, 94) fördert.
